# EUROPÄISCHE PATENTANMELDUNG

(11) **EP 1 905 571 A1**
(43) Veröffentlichungstag der Anmeldung: **02.04.2008**
(21) Anmeldenummer: 06020121.7
(22) Anmeldetag: 26.09.2006
(51) Int. Cl.: B29C 65/16

(54) **Verfahren und Vorrichtung zum Folienschweißen**

(71) Anmelder: ProLas GmbH, 52146 Würselen (DE)
(72) Erfinder: Hänsch, Dirk, Dr., BE-4730 Hauset (BE); Jung, Stefan, D-52078 Aachen (DE)
(74) Vertreter: Paul, Dieter-Alfred

(57) **Zusammenfassung**

Die Erfindung betrifft ein Verfahren zum Verschweißen von mindestens zwei übereinander liegenden Folien (F1, F2), bei dem die Folien (F1, F2) in einem zwischen zwei Presselementen (5, 6) gebildeten Pressspalt (7) gegeneinander gedrückt und mit Laserstrahlung (9) beaufschlagt werden, wobei die Laserstrahlung (9) das erste Presselement (5) und den Pressspalt (7) in Richtung des zweiten Presselements (6) durchstrahlt, dass zumindest ein Teil der Laserstrahlung (9) von einer Laserstrahlung (9) reflektierenden Oberfläche (11) des zweiten Presselements (6) in Richtung des ersten Presselements (5) reflektiert wird.

## Beschreibung

Die Erfindung betrifft ein verfahren zum Verschweißen von mindestens zwei übereinander liegenden Folien, bei dem die Folien in einem zwischen zwei Presselementen gebildeten Pressspalt gegeneinander gedrückt und mit Laserstrahlung beaufschlagt werden, wobei die Laserstrahlung das erste Presselement und den Pressspalt in Richtung des zweiten Presselements durchstrahlt. Des weiteren betrifft die Erfindung eine Vorrichtung zur Durchführung des Verfahrens.

Aus der EP 1 366 890 B1 sind ein Verfahren und eine Vorrichtung zum Verbinden von endlosen Kunststofffolien mit Hilfe eines Laserstrahls bekannt. Die Folien bestehen aus zwei unterschiedlichen Materialien, wobei ein oberes Material von dem Laserstrahl durchstrahlt wird und das untere Material für den Laserstrahl undurchlässig ist und so dessen Energie absorbiert. In der Folge der Absorption werden die beiden Materialien erwärmt, aufgeschmolzen und unter Druck miteinander verbunden. Der für die Verbindung notwendige Druck wird hier durch zwei gegenläufige gegeneinander pressende Rollen erzeugt, welche einen Pressspalt bilden. Dabei ist eine erste Rolle durchlässig für Laserstrahlen ausgebildet, so dass sie und der Pressspalt von dem Laserstrahl durchsetzt werden. Neben der Komprimierung der Folien im Schweißbereich sorgen die Rollen auch für einen Vorschub der Folien.

Nachteil des bekannten Verfahrens ist, dass lediglich zwei verschiedene Folienmaterialien miteinander verschweißt werden können, wobei zumindest eines der verwendeten Folienmaterialien absorbierend für Laserstrahlung ausgebildet sein muss bzw. eine absorbierende Schicht zwischen den Folienmaterialien eingebracht werden muss. ES ist nicht möglich, zwei für Laserstrahlung und für Strahlung im sichtbaren Bereich transparente oder weitestgehend transparente Folien mit Hilfe des bekannten verfahrens miteinander zu verschweißen.

Es ist daher die Aufgabe der vorliegenden Erfindung, ein Verfahren und eine Vorrichtung bereit zu stellen, die es ermöglichen, zwei gleichartige, für Laserstrahlung und für Strahlung im sichtbaren Bereich transparente bzw. nahezu transparente Folien mit Hilfe eines Laserstrahls zu verschweißen, wobei die Folien frei von Laserstrahlung absorbierenden Zusatzstoffen sind.

Die Aufgabe wird bei einem Verfahren der eingangs genannten Art dadurch gelöst, dass zumindest ein Teil der Laserstrahlung von einer Laserstrahlung reflektierenden Oberfläche des zweiten Presselements in Richtung des ersten Presselements reflektiert wird.

Grundgedanke der Erfindung ist es also, den Teil der Laserstrahlung, welche nicht bei einem ersten Durchgang durch den Pressspalt von den Folien absorbiert wurde (Lambert-Beer'sches Gesetz = Abhängig vom Absorptionskoeffizienten), an einer reflektierenden Oberfläche des zweiten Presselements in Richtung des ersten Presselements und damit durch den Pressspalt zurück zu reflektieren. Auf diese Weise wird sichergestellt, dass die nicht absorbierte Energie des Laserstrahls ein weiteres Mal in den Schweißbereich der Folien eintritt und dort zumindest zum Teil absorbiert werden kann. Der Laserstrahl passiert also zwei Mal die Folien im Schweißbereich, wodurch das Material der Folien in der Lage ist, eine größere Menge an Energie aufzunehmen. Daher ist es hier nicht notwendig, Folienmaterial zu verwenden, das nicht transparent ist bzw. dem Zusatzstoffe zugesetzt sind, um seine Absorptionsfähigkeit zu erhöhen. Vielmehr können erfindungsgemäß, transparente bzw. nahezu transparente Folien mit einander verschweißt werden, wobei die zu verschwei-ßenden Folien auch aus dem selben Material bestehen können.

Gemäß einer Ausführungsform des erfindungsgemäßen Verfahrens ist vorgesehen, dass zumindest ein Teil der Laserstrahlung von einer Laserstrahlung reflektierenden Oberfläche z.B. aus Metall des zweiten Presselements in Richtung des ersten Presselements reflektiert wird. Vorteilhaft ist hierbei, dass an der reflektierenden Oberfläche aus Metall des zweiten Presselements ein hoher Reflektionsgrad erzielt wird und es außerdem zu keiner Abnutzung bzw. Beschädigung der metallischen Oberfläche aufgrund der Materialeigenschaften kommt.

Es ist ebenfalls möglich, ein zweites Presselement zu verwenden, welches unterhalb der reflektierenden Oberfläche eine elastische Schicht aufweist, die insbesondere aus Elastomeren z.B. Silikon oder TPE bestehen kann. Die Verwendung einer elastischen Schicht stellt sicher, dass im Pressspalt die zu verschweißenden Folien mit einem optimalen Druck gegeneinander gepresst werden.

Gemäß einer weiteren Ausführungsform des erfindungsgemäßen Verfahrens ist vorgesehen, als Presselemente Pressrollen zu verwenden. Diese können in an sich bekannter Art dafür eingesetzt werden, einerseits den Pressspalt für die zu verschweißenden Folien zu bilden und gleichzeitig den Transport eines endlosen Folienmaterials durch diesen Pressspalt hindurch zu ermöglichen.

Hierbei kann ebenfalls vorgesehen werden, dass die erste Pressrolle von innen nach außen mit der Laserstrahlung durchstrahlt wird. Dies kann beispielsweise dadurch ermöglicht werden, dass ein Laser innerhalb der ersten Pressrolle seine Strahlung durch deren Wandung hindurch abgibt.

Alternativ kann mit Hilfe einer Umlenkoptik ein Laserstrahl von außen in das Innere der ersten Pressrolle geleitet werden, um dann durch die Pressrolle in den Pressspalt einzutreten.

In einer besonders bevorzugten Ausführungsform des erfindungsgemäßen Verfahrens ist vorgesehen, dass die von außen auf die erste Pressrolle auftreffende Laserstrahlung in Richtung der zweiten Pressrolle reflektiert wird. Bei der auftreffenden Laserstrahlung handelt es sich um den Anteil der Laserstrahlung, welcher bereits an der reflektierenden Oberfläche der zweiten Pressrolle reflektiert worden ist und der wiederum den Pressspalt und die darin enthaltenen Folien unter teilweiser Absorption durchsetzt hat. Diese Strahlung wird dann an der Oberfläche der ersten Pressrolle in Richtung der zweiten Pressrolle in den Pressspalt reflektiert. Auf diese Weise wird der Laserstrahl zum dritten Mal durch den Schweißbereich der Folien im Pressspalt geleitet, wobei es erneut zur Absorption von Energie kommt. Letztendlich tritt ein "Pingpong-Effekt" auf, wobei nicht absorbierte Laserstrahlung zwischen den Oberflächen der ersten und der zweiten Pressrolle hin und her reflektiert wird. Hierdurch kann sichergestellt werden, dass es zu einer maximalen Absorption der Energie des Laserstrahls im Schweißbereich der Folien kommt.

Um zwei separate Folienblätter auf einfache weise miteinander zu verschweißen, können als Presselemente auch Pressplatten verwendet werden. Diese ermöglichen es, die Folien miteinander zu verschweißen, ohne dass sie gekrümmt werden.

Die Aufgabe wird ebenfalls durch eine Vorrichtung zur Durchführung des Verfahrens gelöst, bei der das zweite Presselement eine Laserstrahlung reflektierende Oberfläche aufweist, welche zumindest einen Teil der auftreffenden Laserstrahlung in Richtung des ersten Presselements reflektiert.

Ausführungsformen der Erfindung werden im folgenden unter Bezugnahme auf die Zeichnungen näher erläutert. In der Zeichnungen zeigen:
- Figur 1: eine erste erfindungsgemäße Vorrichtung zur Durchführung des Verfahrens,
- Figur 2: eine schematische Teilansicht einer zweiten erfindungsgemäßen Vorrichtung, und
- Figur 3: eine schematische Teilansicht einer dritten erfindungsgemäßen Vorrichtung.

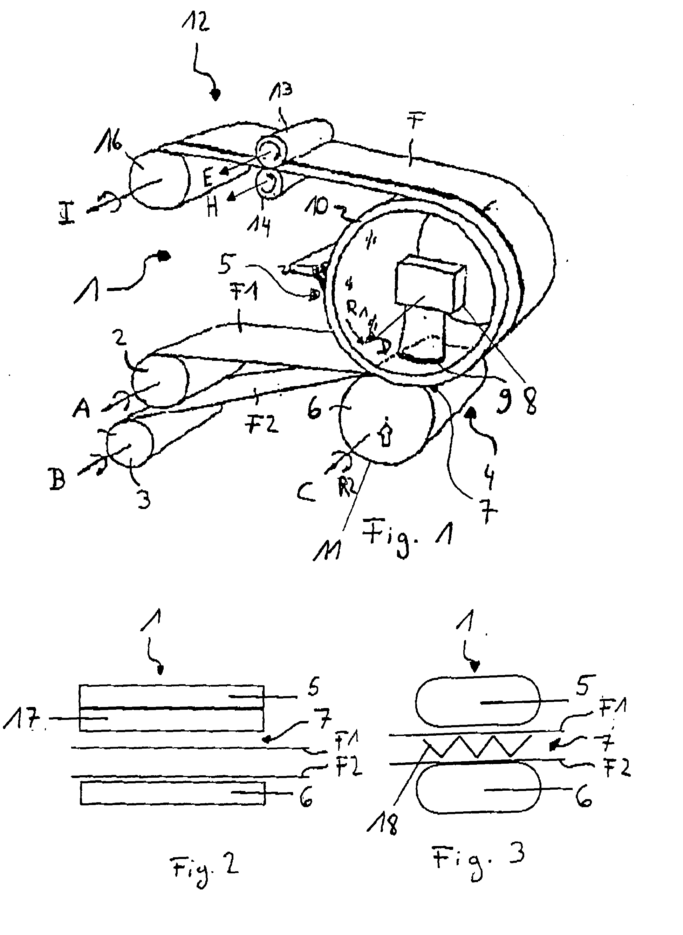

In der Figur 1 ist schematisch eine erste erfindungsgemäße Vorrichtung 1 zur Durchführung des Verfahrens dargestellt. Die Vorrichtung 1 weist zwei drehbar um Achsen A, B gelagerte Folienrollen 2, 3 auf, auf denen jeweils eine Bahn der zu verschweißenden Folien F1, F2 aufgewickelt sind. Die Materialien der beiden Folienmaterialien können identisch sein, sind jedoch auf jeden Fall transparent bzw. nahezu vollständig transparent.

Die Vorrichtung 1 weist weiterhin eine Schweißeinrichtung 4 auf. Diese hat zwei Presselemente (5, 6), die von einer ersten hohlen Pressrolle 5 und einer zweiten, unmittelbar benachbart zu dieser angeordneten, Pressrolle 6 gebildet werden. Die beiden Pressrollen 5, 6 sind drehbar um Achsen C, D gelagert und bilden zwischen sich einen Pressspalt 7.

Innerhalb der ersten Pressrolle 5 ist ein Laser 8 derart angeordnet, dass er Laserstrahlung 9 durch die semi-transparente Außenwand 10 der ersten Pressrolle 5 hindurch in Richtung der zweiten Pressrolle 6 in den Pressspalt 7 abgibt.

Die Oberfläche 10 der ersten Pressrolle 5 ist derart semitransparent ausgebildet, dass sie die von innen auf sie auftreffende Laserstrahlung durchlässt, von außen auf sie auftreffende Laserstrahlung jedoch reflektiert.

Die zweite Pressrolle 6 weist eine reflektierende Oberfläche 11 aus Metall auf. Unterhalb der reflektierenden Oberfläche 11 ist eine nicht gezeigte elastische Schicht aus Silikon angeordnet.

Die Vorrichtung 1 beinhaltet außerdem eine Aufrolleinrichtung 12. Diese besteht aus zwei parallel angeordneten Pressrollen 13, 14, welche um Achse E, H drehbar gelagert sind, die ebenfalls einen Pressspalt 15 bilden. Weiterhin besitzt die Aufrolleinrichtung 12 eine um eine Achse I gelagerte Folienrolle 16, auf die die verschweißte Folie F aufgewickelt wird.

Um die Folien F1 und F2 miteinander zu verschweißen, werden diese von den Folienrollen 2, 3 übereinander liegend in den Pressspalt 7 der Schweißeinrichtung 4 geführt. Durch die gegenläufige Bewegung der Pressrollen 5, 6 in die durch Pfeile R1, R2 angedeuteten Richtungen werden die Folien F1, F2 kontinuierlich durch den Pressspalt 7 transportiert, wobei sie gleichzeitig gegeneinander gedrückt werden.

Die von dem Laser 8 abgegebene Laserstrahlung 9 durchstrahlt die semi-transparente Oberfläche 10 der ersten Pressrolle 5 und tritt in den Pressspalt 7 ein. Dort durchsetzt sie die Folien F1, F2, wobei ein Teil der Energie der Laserstrahlung 9 von den Folien F1, F2 absorbiert wird. Als Folge der Absorption erwärmen sich die Folien F1, F2.

Der Teil der Laserstrahlung 9, welcher nicht von den Folien F1, F2 absorbiert wurde, trifft auf die reflektierende Oberfläche 11 der zweiten Pressrolle 6 auf und wird von dieser zurück in den Pressspalt 7 in Richtung der ersten Pressrolle 5 reflektiert. Dabei wird wiederum ein Teil der Energie von den Folien F1, F2 absorbiert, wodurch sich diese weiter erwärmen, schmelzen und unter dem Druck der Pressrollen 5, 6 verschweißt werden.

Der Anteil der Laserstrahlung 9, der wiederum nicht von den Folien F1, F2 absorbiert wurde, wird an der semitransparenten Oberfläche 10 der ersten Pressrolle 5 in Richtung der zweiten Pressrolle 11 in den Pressspalt 7 reflektiert, wobei es zu weiterer Asorption von Energie durch die Folien F1, F2 kommt. Letztendlich wird die Laserstrahlung 9 also zwischen den Pressrollen 5 und 6 hin und her reflektiert.

Die Folien F1, F2 bilden nach dem Verschweißen eine gemeinsame Folie F, die durch den von den Pressrollen 13, 14 gebildeten Pressspalt 15 geführt und auf der Folienrolle 16 aufgewickelt wird.

In der Figur 2 ist eine schematische Teilansicht einer zweiten erfindungsgemäßen Vorrichtung 1 gezeigt. Sie weist als Presselemente zwei parallel zueinander angeordnete Pressplatten 5, 6 auf, die einen Pressspalt 7 zwischen sich bilden. Zwei Folien F1 und F2 sind innerhalb des Pressspaltes 7 übereinander angeordnet. Die in der Zeichnung obere Pressplatte 5 besteht aus Glas und weist an ihrer Unterseite eine den Pressspalt 7 begrenzende elastische Schicht 17 aus einem Elastomer auf. Die in der Zeichnung untere Pressplatte 6 besteht aus Metall und weist eine Laserstrahlung reflektierende Oberfläche auf.

In der Figur 3 ist eine schematische Teilansicht einer dritten erfindungsgemäßen Vorrichtung 1 gezeigt. Diese weist als Presselemente zwei ovale Pressrollen 5, 6 auf, die zwischen sich einen Pressspalt 7 ausbilden. In dem Pressspalt 7 sind die Folien F1, F2 übereinander angeordnet. Die Pressrollen 5, 6 können von umlaufenden Metallbändern gebildet werden. Beide Pressrollen 5, 6 sind so ausgebildet, dass sie aus dem Pressspalt 7 auf sie auftreffende Laserstrahlung zurück in den Pressspalt 7 reflektieren. Dieses Hin- und Herreflektieren ist schematisch durch einen Laserstrahl 18 dargestellt.

## Patentansprüche

1. Verfahren zum Verschweißen von mindestens zwei übereinander liegenden Folien (F1, F2), bei dem die Folien (F1, F2) in einem zwischen zwei Presselementen (5, 6) gebildeten Pressspalt (7) gegeneinander gedrückt und mit Laserstrahlung (9) beaufschlagt werden, wobei die Laserstrahlung (9) das erste Presselement (5) und den Pressspalt (7) in Richtung des zweiten Presselements (6) durchstrahlt, **dadurch gekennzeichnet, dass** zumindest ein Teil der Laserstrahlung (9) von einer Laserstrahlung (9) reflektierenden Oberfläche (11) des zweiten Presselements (6) in Richtung des ersten Presselements (5) reflektiert wird.

2. Verfahren nach Anspruch 1, **dadurch gekennzeichnet, dass** zumindest ein Teil der Laserstrahlung (9) von einer Laserstrahlung reflektierenden Oberfläche (11) aus Metall des zweiten Presselements (6) in Richtung des ersten Presselements (5) reflektiert wird.

3. Verfahren nach einem der Ansprüche 1 oder 2, **dadurch gekennzeichnet, dass** ein zweites Presselement (6) verwendet wird, welches unter der reflektierenden Oberfläche (11) eine elastische Schicht, insbesondere aus Silikon, aufweist.

4. Verfahren nach einem der Ansprüche 1 bis 3, **dadurch gekennzeichnet, dass** die Presselemente (5, 6) als Pressrollen ausgestaltet sind.

5. Verfahren nach Anspruch 4, **dadurch gekennzeichnet, dass** die erste Pressrolle (5) von innen nach außen mit der Laserstrahlung (9) durchstrahlt wird.

6. Verfahren nach Anspruch 5, **dadurch gekennzeichnet, dass** von außen auf die erste Pressrolle (5) auftreffende Laserstrahlung (9) in Richtung der zweiten Pressrolle (6) reflektiert wird.

7. Verfahren nach einem der Ansprüche 1 bis 3, **dadurch gekennzeichnet, dass** als erstes und zweites Presselement Pressplatten verwendet werden.

8. Vorrichtung (1) zum verschweißen von mindestens zwei übereinander liegenden Folien (F1, F2) mit zwei zwischen sich einen Pressspalt (7) bildenden Presselementen (5, 6), welche die Folien (F1, F2) zusammen pressen, und mit einem Laser (8), der so angeordnet ist, dass er Laserstrahlung (9) unter Durchstrahlung des ersten Presselements (5) und des Pressspalts (7) in Richtung des zweiten Presselements (6) abgibt, **dadurch gekennzeichnet, dass** das zweite Presselement (6) eine Laserstrahlung (9) reflektierende Oberfläche (11) aufweist, welche zumindest einen Teil der auftreffenden Laserstrahlung (9) in Richtung des ersten Presselements (5) reflektiert.

9. Vorrichtung (1) nach Anspruch 8, **dadurch gekennzeichnet, dass** das zweite Presselement (6) eine reflektierende Oberfläche (11) aus Metall aufweist.

10. Vorrichtung (1) nach einem der Ansprüche 8 oder 9, **dadurch gekennzeichnet, dass** das zweite Presselement (6) unterhalb der reflektierenden Oberfläche (11) aus Metall eine elastische Schicht, insbesondere aus Silikon, aufweist.

11. Vorrichtung (1) nach einem der Ansprüche 8 bis 10, **dadurch gekennzeichnet, dass** das erste und das zweite Presselement (5, 6) als Pressrollen ausgebildet sind.

12. Vorrichtung (1) nach Anspruch 11, **dadurch gekennzeichnet, dass** der Laser (8) innerhalb der ersten Pressrolle (5) angeordnet ist.

13. Vorrichtung (1) nach Anspruch 12, **dadurch gekennzeichnet, dass** die erste Pressrolle (5) eine semitransparente Oberfläche (10) aufweist, die für die unmittelbar vom Laser (8) abgegebene Laserstrahlung (9) durchlässig ist, aber für Laserstrahlung (9), die auf die äußere Oberfläche (10) der ersten Pressrolle (5) trifft, reflektierend ausgebildet ist.

14. Vorrichtung (1) nach einem der Ansprüche 8 bis 10, **dadurch gekennzeichnet, dass** das erste und das zweite Presselement als Pressplatten ausgebildet sind.
